# FASCICULE DE BREVET EUROPEEN

(11) **EP 0 670 624 B1**
(45) Date de publication et mention de la délivrance du brevet: **13.09.2000**
(21) Numéro de dépôt: 95400410.7
(22) Date de dépôt: 27.02.1995
(51) Int. Cl.: H02M 3/337, H02M 7/538

(54) **Alimentation à découpage adaptée pour permettre des commutations sous tension réduite**
Angepasstes Schaltnetzteil um Kommutierungen bei niedriger Spannung auszuführen
Switching power supply adapted for allowing reduced voltage commutations

(30) Priorité: 03.03.1994 FR 9402462
(43) Date de publication de la demande: 06.09.1995
(73) Titulaire: ALCATEL, 75008 Paris (FR)
(72) Inventeur: Sadarnac, Daniel, c/o Supelec, F-91192 Gif-Sur-Yvette Cedex (FR); d'Almeida, Sylvain, c/o Supelec, F-91192 Gif-Sur-Yvette Cedex (FR)
(74) Mandataire: Scheer, Luc

(56) Documents cités:
- APEC '94 NINTH ANNUAL APPLIED POWER ELECTRONICS CONFERENCE, 13 Février 1994 ORLANDO, US, pages 143-149, XP 000467312 CHO 'Novel full bridge zero voltage transition PWM DC/DC converter for high power applications'
- 21ST ANNUAL IEEEPOWER ELECTRONICS SPECIALISTS CONFERENCE PESC '90 RECORD, 11 Juin 1990 SAN ANTONIO, TEXAS, pages 298-304, XP 000173920 FERREIRA 'A generic soft switching converter topology with a parallel nonlinear network for high power application '
- 18TH ANNUAL POWER ELECTRONICS SPEIALISTS CONFERENCE PESC '87 RECORD, 11 Juin 1987 BLACKSBURG, VIRGINIA, pages 424-430, PATTERSON 'Pseudo-resonant full bridge DC/DC converter'

## Description

Le domaine de l'invention est celui des alimentations à découpage et concerne plus précisément une alimentation à découpage comportant un bras de pont à cellules de commutation pilotées pour commuter sous tension réduite.

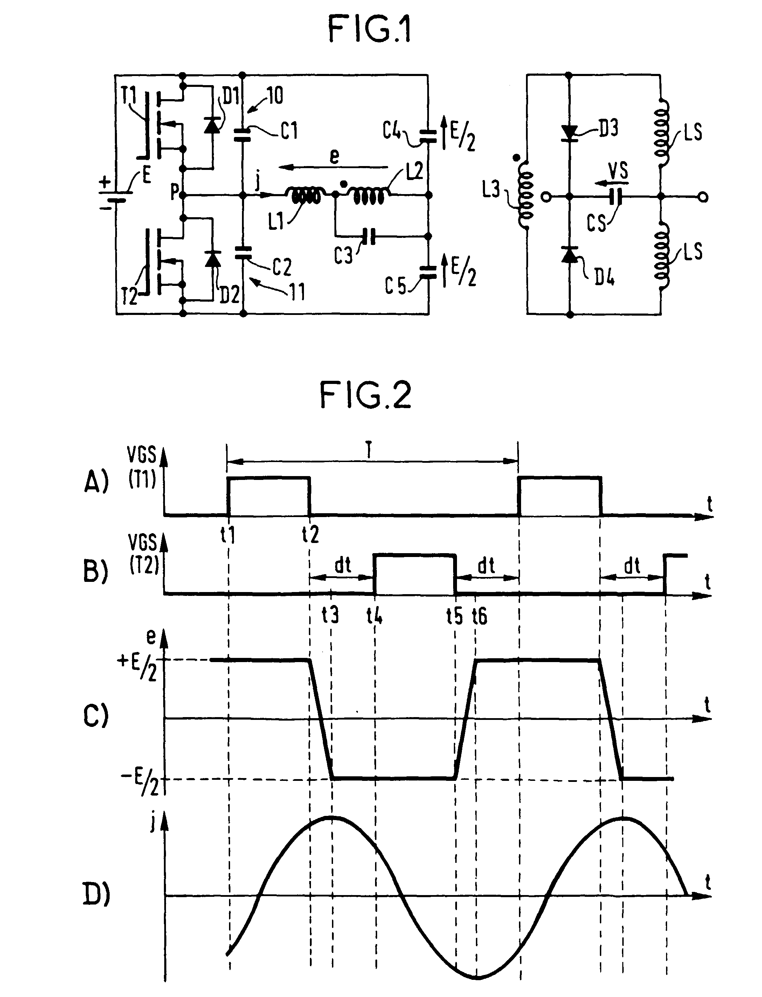

La figure 1 représente une alimentation à découpage classique de type demi-pont. Une alimentation à découpage de ce type est notamment décrite dans "Les alimentations à fréquence de découpage élevée" de Daniel SADARNAC, ESE 9, Eyrolles.

Une source de tension fournit une tension continue E à un bras de pont comportant deux cellules de commutation 10, 11 en série. La cellule de commutation 10 comprend, reliés en parallèle, un moyen de commutation T1, une diode de protection D1 et un condensateur C1. De même, la cellule de commutation 11 comprend, également reliés en parallèle, un moyen de commutation T2, une diode de protection D2 et un condensateur C2. Le point milieu P du bras de pont représenté est relié à une inductance L1 suivie par une charge, ici constituée par un transformateur d'inductance primaire L2 et d'inductance secondaire L3. Un condensateur C3 est relié en parallèle sur l'inductance primaire L2. L'autre extrémité de la charge constituée par l'inductance L2 est reliée entre deux condensateurs de maintien C4 et C5 auxquels est appliquée la tension continue E.

Au secondaire du transformateur, deux diodes de redressement D3 et D4 coopèrent avec deux inductances Ls et un condensateur de lissage Cs pour fournir une tension de sortie continue Vs. La tension Vs est appliquée à une charge non représentée.

Le fonctionnement de cette alimentation est décrit en référence à la figure 2 qui représente quatre chronogrammes corrélatifs (A à D) des signaux représentés à la figure 1.

Les moyens de commutation T1 et T2 sont par exemple constitués par des transistors MOSFET de puissance incluant les diodes de protection D1 et D2. Un circuit de commande non représenté applique sur les grilles des transistors T1 et T2 des impulsions de commande représentées aux chronogrammes A et B. Ces impulsions ont une période T et sont décalées dans le temps pour alternativement rendre conducteurs (saturés) et non conducteurs (bloqués) les transistors T1 et T2. Lorsqu'une impulsion est appliquée sur la grille d'un des transistors, celui-ci est rendu conducteur. Une telle impulsion est appliqué au temps tl au transistor T1, le transistor T2 étant bloqué. La tension e (chronogramme C) mesurée entre le point milieu des condensateurs C4 et C5 et le point milieu du bras de pont est égale à +E/2 qui est la tension présente aux bornes du condensateur C4. Le courant j (chronogramme D) traversant le transistor T1 augmente et est fourni à la charge constituée par l'inductance L1 et le primaire du transformateur d'inductance L2. Au temps t2, le transistor T1 est rendu bloqué et l'inductance L1 s'oppose au passage rapide du courant, ce qui provoque la charge du condensateur C1 et la décharge du condensateur C2. La tension e diminue alors jusqu'à atteindre -E/2 au temps t3, où la diode D2 entre en conduction. Le condensateur C2 présente alors une faible tension à ses bornes. Un temps de garde dt est ménagé entre la fin de conduction d'un transistor et le début de conduction de l'autre transistor afin d'éviter que les condensateurs C1 et C2 ne soient brutalement chargés et déchargés. On diminue ainsi les pertes. Lorsque la tension e est devenue négative, le courant j s'inverse et, au temps t4, le transistor T2 est rendu conducteur à son tour. Le phénomène se reproduit alors de façon symétrique.

On génère ainsi une tension e alternative et symétrique qui permet d'obtenir une tension de sortie Vs fonction de la période de découpage T.

La capacité des condensateurs C1 et C2 résulte d'un compromis entre les pertes occasionnées et la fréquence de découpage. Si leur capacité est importante, les pertes par commutation diminuent mais la fréquence de découpage doit être relativement faible car il faut plus de temps pour les charger et les décharger. D'autre part, leur présence est indispensable pour permettre une commutation sous faible tension, encore appelée commutation douce.

Le principal inconvénient d'une alimentation à découpage de ce type est qu'il est indispensable d'utiliser l'inductance L1 pour permettre de charger et de décharger les condensateurs C. Lorsque la charge est constituée par un transformateur, son inductance primaire est en effet trop faible pour pouvoir générer un courant de charge et de décharge des condensateurs C1 et C2 suffisants. Aux instants de charge et de décharge de ces condensateurs, le courant j doit être important pour permettre une charge et une décharge rapides. Ainsi, en référence à la figure 2, pendant les périodes t2 à t3 et t5 à t6, le courant j devant être suffisant, il est également important le reste du temps pendant qu'il circule dans les transistors T1 ou T2 ou dans les diodes D1 ou D2, ce qui entraîne des pertes par conduction et par commutation. Il est dès lors nécessaire de sur-dimensionner ces transistors.

De plus, si l'impédance présentée par la charge alimentée par ce dispositif diminue, il faut néanmoins que le courant j soit présent et suffisamment important aux instants de commutation. En l'absence de charge, les pertes sont donc importantes.

Un autre problème posé par cette inductance L1 est qu'elle est difficile à construire et qu'elle entraîne des pertes fer importantes. Il est en effet nécessaire de la réaliser sous la forme d'un tore pour des raisons de rayonnement électromagnétique et, pour éviter son échauffement, il faut la sur-dimensionner, ce qui pose des problèmes d'encombrement. Dans des applications à fort courant, par exemple pour une alimentation à découpage de 500 W, L1 doit présenter une inductance de l'ordre de quelques µH et capable de supporter 15 A. On considère que la présence de cette inductance entraîne une perte de rendement de l'ordre de 3%. Comme les pertes fer augmentent en f^{3/2}, on est également limité à des fréquences de découpage inférieures à 1 MHz.

Par ailleurs, dans le cas de l'alimentation d'une charge variable ou alors si la tension E n'est pas fixe, la tension de sortie Vs ne peut être maintenue constante qu'en réalisant un asservissement de la fréquence de découpage. Ceci entraîne un encombrement plus important, un surcoût, et pose des problèmes liés aux rayonnements électromagnétiques.

L'article de M. Cho "Novel full bridge zero voltage transition PWM DC/DC converter for high power applications" décrit une alimentation à découpage à commutation douce. Cette commutation douce étant réalisée grâce à une source de courant impulsionnel constituée d'une inductance et de deux transistors supplémentaires.

La présente invention a notamment pour objectif de remédier à ces multiples inconvénients.

Plus précisément, un des objectifs de l'invention est de fournir une alimentation à découpage ne nécessitant pas la présence d'une inductance telle que L1 et pouvant ainsi fonctionner à des fréquences de découpage bien plus importantes que dans l'état de la technique tout en diminuant les pertes et l'encombrement.

Cet objectif, ainsi que d'autres qui apparaîtront par la suite, est atteint grâce à une alimentation à découpage comprenant au moins un bras de pont constitué par deux cellules de commutation en série recevant une tension continue à découper, chaque cellule de commutation comprenant un moyen de commutation en parallèle avec un condensateur et une diode de protection, les moyens de commutation étant alternativement fermés et ouverts pour fournir une tension alternative à une fréquence de découpage appliquée à une charge dont l'une des bornes est raccordée au point commun des cellules de commutation, une source de courant impulsionnel étant connectée au point commun, la source de courant impulsionnel étant constituée par un circuit de type LC dimensionné pour que le courant circulant dans le circuit soit en retard de π/2 par rapport à la tension appliquée à la charge, de manière à délivrer des impulsions de courant destinées à charger et décharger alternativement chacun des condensateurs sur les fronts de la tension alternative.

Dans un mode de réalisation préférentiel, la source de courant impulsionnel est en parallèle d'au moins une des cellules de commutation, alors que dans un autre mode de réalisation, une des bornes de la source de courant impulsionnel est raccordée à ce point milieu et l'autre borne est raccordée entre deux condensateurs en série auxquels est appliquée la tension continue.

Avantageusement, la source de courant impulsionnel est constituée par un jeu de cellules LC en parallèle, chaque cellule LC étant constituée d'une inductance en série avec un condensateur dimensionnés pour que le courant circulant dans chaque cellule LC présente un extremum en phase avec les fronts de montée et de descente de la tension appliquée à cette cellule. Ceci est obtenu en déphasant de π/2 chacune des composantes spectrales de courant, relatives à chacune des cellules par rapport à chacune des composantes spectrales de même rang de tension appliquées.

La source de courant impulsionnel peut être constituée par trois cellules LC en parallèle et les moyens de commutation par des transistors MOSFET incluant les diodes de protection.

D'autres caractéristiques et avantages de l'invention apparaîtront à la lecture de la description suivante de plusieurs modes de réalisation préférentiels, donnés à titre illustratif et non limitatif, et des dessins annexés dans lesquels :
- la figure 1 représente une alimentation à découpage de type connu ;
- la figure 2 représente des chronogrammes corrélatifs relatifs à la figure 1 ;
- la figure 3 représente un premier mode de réalisation de l'alimentation à découpage de l'invention ;
- la figure 4 représente un deuxième mode de réalisation de l'alimentation à découpage de l'invention ;
- les figures 5 à 8 représentent plusieurs modes de réalisation de la source de courant impulsionnel des figures 3 et/ou 4 ;
- les figures 9 et 10 représentent respectivement l'impédance présentée par une cellule LC de la figure 5 et le déphasage du courant qui la traverse par rapport à la tension à ses bornes, en fonction de la fréquence ;
- la figure 11 représente des chronogrammes corrélatifs permettant de comprendre le fonctionnement de la source de courant impulsionnel ;
- la figure 12 représente des chronogrammes corrélatifs relatifs aux figures 3 et 4 ;
- la figure 13 représente une alimentation à découpage de type à pont mettant en oeuvre la présente invention.

Les figures 1 et 2 ont été décrites précédemment en référence à l'état de la technique.

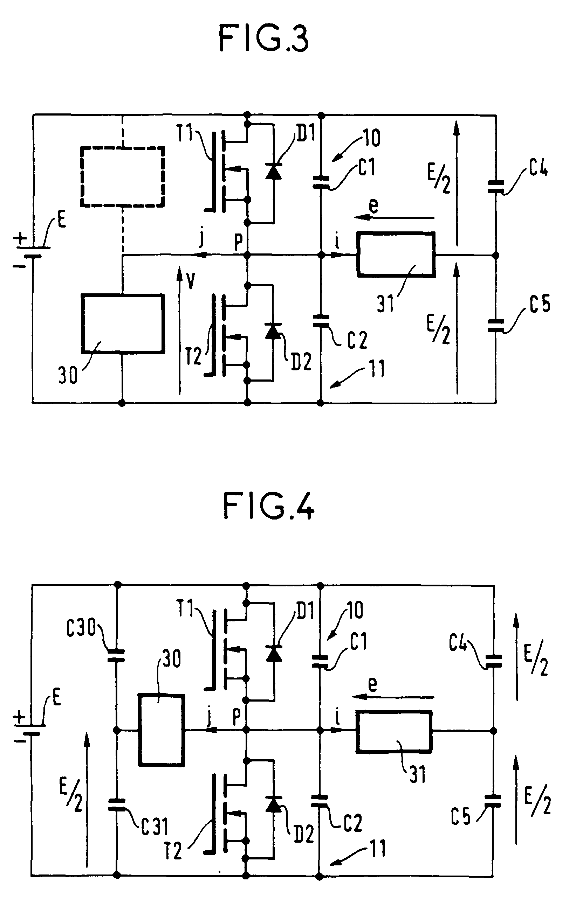

La figure 3 représente un premier mode de réalisation préférentiel de l'invention où l'alimentation à découpage fonctionne en onduleur. Les éléments identiques à ceux de la figure 1 portent les mêmes références.

L'invention réside dans la structure du bras de pont comprenant les deux cellules de commutation 10 et 11. Au point milieu P du bras de pont est reliée une source de courant impulsionnel 30 constituée par un circuit de type LC, c'est à dire constitué de selfs et de condensateurs, ce circuit étant dimensionné pour que le courant circulant dans le circuit soit en retard de π/2 par rapport à la tension appliquée à la charge, référencée 31. Cette charge est par exemple constituée par un dispositif de chauffage par induction. La source de courant impulsionnel 30 est conçue pour délivrer des impulsions de courant destinées à charger et décharger alternativement chacun des condensateurs C1 et C2 sur les fronts de la tension alternative e.

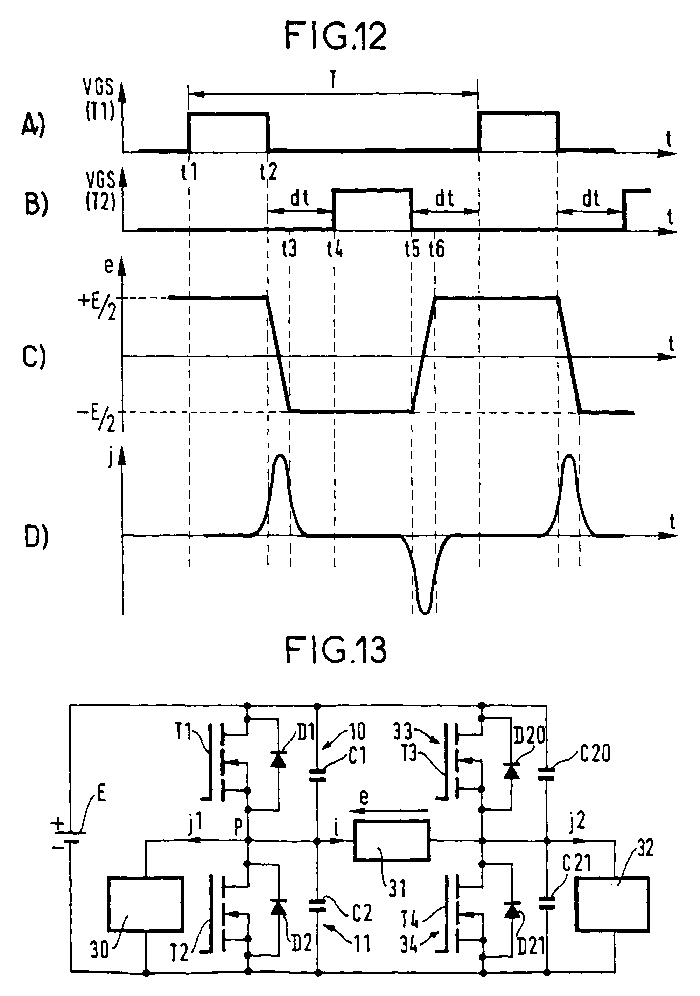

Le chronogramme D de la figure 12 montre l'allure du courant j fourni par cette source de courant 30, les autres chronogrammes (A à C) étant identiques à ceux de la figure 2. La fonction de cette source 30 est donc de générer une impulsion de courant aux instants d'ouverture des moyens de commutation. Les impulsions de courant sont centrées sur les fronts montants et descendants de e. Les impulsions de courant sont positives lorsque la tension e décroît et positives lorsque e croît.

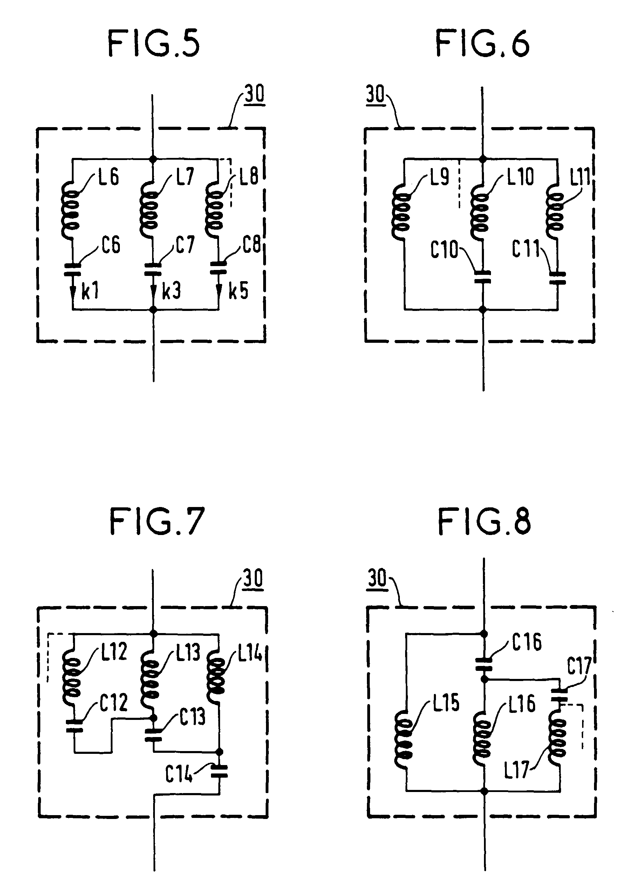

Les figures 5 et 7 représentent des modes de réalisation de la source de courant impulsionnel 30 prévue pour être utilisée dans le montage de la figure 3.

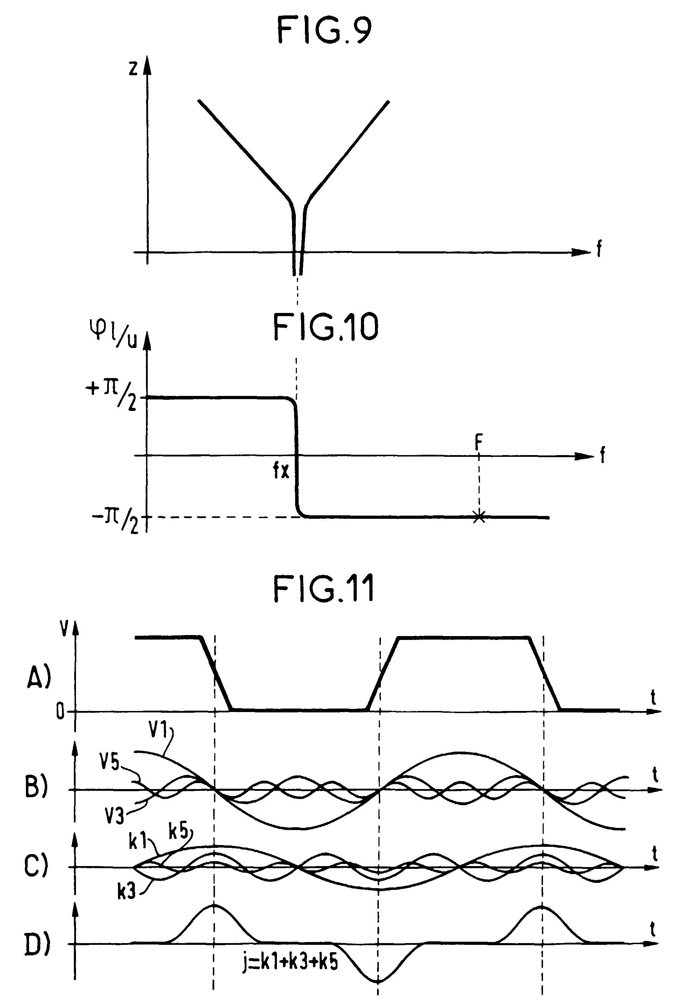

Sur la figure 5, la source de courant impulsionnel 30 est constituée par un jeu de cellules LC en parallèle. Plus précisément, chaque cellule LC est constituée par une inductance L6, L7 ou L8 en série avec un condensateur C6, C7, C8 respectivement. Chaque cellule LC est dimensionnée pour retarder de π/2 le courant qui la traverse par rapport à la tension à ses bornes comme représenté sur les figures 9 et 10. Le courant circulant dans chaque cellule LC présente un extremum en phase avec les fronts de montée et de descente de la tension qui lui est appliquée. Ceci est donc obtenu en déphasant de π/2 chacune des composantes spectrales de courant, relatives à chacune des cellules par rapport à chacune des composantes spectrales de même rang de tension appliquées.

La figure 9 représente l'impédance présentée par une cellule LC en fonction de la fréquence. Une cellule LC constitue un filtre réjecteur de bande de fréquence centrale fx. En regard de la figure 10 qui représente le déphasage ϕ du courant traversant cette cellule LC par rapport à la tension à ses bornes, on observe un déphasage de +π/2 pour les fréquences inférieures à fx et un déphasage de -π/2 pour les fréquences supérieures à fx. Ainsi, en dimensionnant chaque cellule LC pour que le déphasage du courant par rapport à la tension soit de -π/2, par exemple en sous-dimensionnant cette cellule pour l'accorder sur une fréquence F supérieure à fx, on obtient des courants correspondant à la fondamentale et aux harmoniques impaires de la tension e dont la somme correspond au courant représenté sur le chronogramme D de la figure 12.

La figure 11 représente quatre chronogrammes corrélatifs permettant d'expliquer le fonctionnement de la source de courant. On note V la tension présente aux bornes de la source de courant 30. Cette tension évolue entre 0 et +E. Le chronogramme B montre l'évolution des tensions V1, V3 et V5 correspondant respectivement aux harmoniques de rang 1, 3 et 5 de la tension V, c'est à dire à des fréquences f1, f3 et f5. La somme de toutes les harmoniques impaires est égale à V. Le chronogramme C montre l'évolution des courants k1 à k3 parcourant les cellules LC de la figure 5. Ces courants sont déphasés de 90° par rapport aux tensions V1 à V5 correspondantes. La somme de ces courants, obtenue par la mise en parallèle des cellules LC, permet d'obtenir le courant j du chronogramme D. Il va de soi qu'un nombre plus important de cellules LC pourrait être utilisé, ce qui permet d'obtenir des impulsions de courant d'amplitude plus importante et de largeur plus faible. Des essais ont cependant montré que trois cellules LC en parallèle offrent un bon compromis entre l'encombrement et la forme des impulsions. La forme idéale d'une impulsion est rectangulaire.

La source de courant impulsionnel de la figure 7 constitue une alternative possible avec une cellule L12C12 en parallèle avec une self L13 en série avec un condensateur C13, la self L13 et le condensateur C13 étant en parallèle d'une self L14, elle-même en série avec un condensateur C14.

La source de courant de la figure 7 fournit des impulsions de courant ayant des allures similaires à celles fournies par la source de la figure 5.

Il est à noter que la source de courant impulsionnel 30 représentée à la figure 3 peut également être connectée à la borne + de la tension E, comme représenté en traits discontinus sur cette figure. Il est également possible de placer une source de courant impulsionnel aux bornes de chaque cellule de commutation.

Les cellules LC de la figure 5 peuvent également être partagées entre le potentiel positif et le potentiel négatif de la tension E. A titre d'exemple, les cellules L6C6 et L7C7 peuvent être reliées à la borne - alors que la cellule L8C8 est reliée à la borne +.

La figure 4 représente un autre mode de réalisation d'une alimentation à découpage selon l'invention où le fonctionnement est également de type onduleur. Ce mode de réalisation diffère de celui de la figure 3 en ce que la borne de la source 30 (pouvant notamment être également réalisée selon les figures 5 et 7) précédemment reliée à la borne -, est maintenant raccordée entre deux condensateurs C30, C31 en série auxquels est appliquée la tension continue E. Ce montage présente l'avantage que les condensateurs utilisés pour réaliser la source de courant impulsionnel ne sont plus soumis à une tension moyenne égale à E/2 et n'ont à supporter que l'amplitude d'une composante alternative de tension qui leur est appliquée. On peut alors utiliser des condensateurs moins encombrants et moins coûteux.

Sur les figures 6 et 8 sont représentés des modes de réalisation de sources de courant impulsionnel convenant également pour le montage de la figure 4. Ces sources sont également réalisées à partir de selfs et de condensateurs. Pour la figure 6, une self L9 est en parallèle avec deux cellules série L10C10 et L11C11. Ce mode de réalisation diffère de celui de la figure 5 en ce que le condensateur C6 est supprimé. Pour la figure 8, le mode de réalisation met en oeuvre trois selfs L15 à L17 et deux condensateurs C16, C17. Ce mode de réalisation diffère de celui de la figure 7 en ce que le condensateur C14 est supprimé.

La figure 13 représente une alimentation à découpage de type à pont. La charge 31 a une de ses bornes reliée au point commun P du pont déjà décrit en référence à la figure 3, l'autre de ses bornes étant reliée au point commun d'un autre bras de pont constitué par deux cellules de commutation 33, 34. La cellule de commutation 33 comprend, reliés en parallèle, un moyen de commutation T3, une diode de protection D20 et un condensateur C20. La cellule de commutation 34 comprend, également reliés en parallèle, un moyen de commutation T4, une diode de protection D21 et un condensateur C21. En parallèle de la cellule de commutation 34 est connectée une source de courant impulsionnel 32 pouvant être réalisée conformément à la figure 5 par exemple. La source 32 est parcourue par un courant j2 alors que le courant parcourant la source 30 est référencé j1. La charge 31 peut être constituée par le bobinage primaire d'un transformateur.

Le principal avantage de l'invention est que l'inductance L1 utilisée dans les montages existants (figure 1) est supprimée et remplacée par un circuit LC assurant une fonction de déphasage du courant par rapport à la tension appliquée à la charge. Ce circuit LC ne pose pas de problème de réalisation délicat et présente un encombrement moindre que l'inductance L1. Les pertes globales sont réduites.

De plus, lorsque la charge est constituée par un transformateur (montage en pont), la tension au secondaire de ce transformateur peut être réglée en modifiant le déphasage des signaux de commande appliqués aux deux bras de pont. Un tel fonctionnement n'est pas possible dans l'état de la technique.

Les amplitudes et durées des impulsions de courant générées peuvent être optimisées pour suffire à charger et décharger les condensateurs en parallèle des moyens de commutation. On évite ainsi des courants importants dans les moyens de commutation et l'encombrement global diminue.

Un autre avantage de l'invention en fonctionnement de convertisseur continu/continu (la charge est constituée par un transformateur) est que la tension au secondaire du transformateur est moins importante par rapport à l'état de la technique. On peut alors utiliser des diodes de redressement dont les tensions maximales admissibles sont inférieures à celles de l'état de la technique, et donc plus rapides.

La fréquence de découpage peut être plus importante que dans l'état de la technique et avoisiner 3 MHz lorsque les impulsions de courant ont une durée faible, par exemple de l'ordre de 30ns. Les capacités des condensateurs en parallèle peuvent être diminuées si la fréquence de découpage est faible et, on peut même supprimer ces condensateurs si la capacité parasite Cds entre le drain et la source d'un transistor MOSFET est suffisamment importante pour permettre une commutation douce.

L'invention permet de réaliser des commutations douces tout en générant des signaux proches de ceux obtenus avec des commutations dures.

## Revendications

1. Alimentation à découpage comprenant au moins un bras de pont constitué par deux cellules de commutation (10, 11) en série recevant une tension continue (E) à découper, chaque cellule de commutation (10, 11) comprenant un moyen de commutation (T1, T2) en parallèle avec un condensateur (C1, C2) et une diode de protection (D1, D2), lesdits moyens de commutation (T1, T2) étant alternativement fermés et ouverts pour fournir une tension alternative (e) à une fréquence de découpage appliquée à une charge (31) dont l'une des bornes est raccordée au point commun (P) desdites cellules de commutation (10, 11),
caractérisée en ce qu'une source de courant impulsionnel (30) est connectée audit point commun (P), ladite source de courant impulsionnel (30) étant constituée par un circuit de type LC (L6 à L17, C6 à C17) dimensionné pour que le courant circulant dans ledit circuit soit en retard de π/2 par rapport à la tension appliquée à ladite charge (31), de manière à délivrer des impulsions de courant destinées à charger et décharger alternativement chacun desdits condensateurs (C1, C2) sur les fronts de ladite tension alternative (e).

2. Alimentation à découpage selon la revendication 1, caractérisée en ce que ladite source de courant impulsionnel (30) est en parallèle d'au moins une desdites cellules de commutation (10, 11).

3. Alimentation à découpage selon la revendication 1, caractérisée en ce qu'une des bornes de ladite source de courant impulsionnel (30) est raccordée audit point milieu (P) et en ce que l'autre borne est raccordée entre deux condensateurs (C30, C31) en série auxquels est appliquée ladite tension continue (E).

4. Alimentation à découpage selon l'une des revendications 1 à 3, caractérisée en ce que ladite source de courant impulsionnel (30) est constituée par un jeu de cellules LC en parallèle (L6, C6; L7, C7; L8, C8), chaque cellule LC (L6, C6; L7, C7; L8, C8) étant constituée d'une inductance (L6, L7, L8) en série avec un condensateur (C6, C7, C8) dimensionnés pour que le courant circulant dans chaque cellule LC soit en retard de π/2 par rapport à la tension appliquée à cette cellule, de façon à déphaser de π/2 une des harmoniques impaires (f1, f3, f5) du signal appliqué à ladite charge ou la fondamentale de ce signal.

5. Alimentation à découpage selon l'une des revendications 1 à 4, caractérisée en ce que ladite source de courant impulsionnel (30) est constituée par trois cellules LC en parallèle (L6, C6; L7, C7; L8, C8).

6. Alimentation à découpage selon l'une des revendications 1 à 5, caractérisée en ce que lesdits moyens de commutation (T1, T2) sont constitués de transistors MOSFET incluant lesdites diodes de protection (D1, D2).

## Patentansprüche

1. Schaltnetzteil mit zumindest einem Überbrückungsarm, gebildet aus zwei Kommutierungszellen (10, 11), in Serie geschaltet, die eine zu schaltende Gleichspannung (E) aufnehmen, wobei jede Kommutierungszelle (10, 11) eine Kommutierungseinrichtung (T1, T2) in Parallelschaltung mit einem Kondensator (C1, C2) und eine Schutzdiode (D1, D2) umfasst, wobei die Kommutierungseinrichtungen (T1, T2) alternativ geschlossen und geöffnet sind, um eine Wechselspannung (e) mit einer Schaltfrequenz abzugeben, die an einer Last (31) anliegt, deren eine Klemme mit einem gemeinsamen Punkt (P) der Kommultierungszellen (10, 11) verbunden ist, dadurch gekennzeichnet, dass eine Impulsstromquelle (30) mit dem gemeinsamen Punkt (P) verbunden ist, wobei die Impulsstromquelle (30) durch einen LC Schaltkreis (L6 bis L17, C6 bis C17) gebildet wird, der so dimensioniert ist, dass der in dem Schaltkreis zirkulierende Strom um π/2 gegenüber der an die Last (31) angelegten Spannung verzögert ist, in einer Weise, dass Stromimpulse abgegeben werden, die dazu bestimmt sind, jeden der Kondensatoren (C1, C2) an den Flanken der Wechselspannung (e) alternativ zu laden und zu entladen.

2. Schaltnetzteil nach Anspruch 1, dadurch gekennzeichnet, dass die Impulsstromquelle (30) parallel geschaltet zu zumindest einer der Kommutierungszellen (10, 11) ist.

3. Schaltnetzteil nach Anspruch 1, dadurch gekennzeichnet, dass eine der Klemmen der Impulsstromquelle (30) mit dem Mittelpunkt (P) verbunden ist und dadurch, dass die andere Klemme mit zwei Kondensatoren (C30, C31) in Serienschaltung verbunden ist, an denen die Gleichspannung (E) anliegt.

4. Schaltnetzteil nach einem der Ansprüche 1 bis 3, dadurch gekennzeichnet, dass die Impulsstromquelle (30) durch eine Anordnung aus LC Zellen in Parallelschaltung (L6, C6; L7, C7; L8, C8) gebildet ist, wobei jede LC Zelle (L6, C6; L7, C7; L8, C8) durch eine Induktanz (L6, L7, L8) in Serienschaltung mit einem Kondensator (C6, C7, C8) gebildet ist, die für den Strom dimensioniert sind, welcher in einer jeden LC Zelle zirkuliert, mit Verzögerung um π/2 gegenüber der an die Zellen angelegten Spannung, in einer Weise, um eine der ungeraden Oberwellen (f1, f3, f5) des an die Last angelegten Signales oder die Fundamentale des Signales um π/2 Phasen zu verschieben.

5. Schaltnetzteil nach einem der Ansprüche 1 bis 4, dadurch gekennezeichnet, dass die Impulsstromquelle (30) durch drei LC Zellen in Parallelschaltung (L6, C6; L7, C7; L8, C8) gebildet wird.

6. Schaltnetzteil nach einem der Ansprüche 1 bis 5, dadurch gekennezeichnet, dass die Kommutierungseinrichtungen (T1, T2) aus MOSFET Transistoren gebildet sind, die Schutzdioden (D1, D2) einschließen.

## Claims

1. A chopper power supply including at least one bridge arm constituted by two switching sections (10, 11) in series receiving a DC voltage (E) to be chopped, each switching section (10, 11) including switching means (T1, T2) in parallel with a capacitor (C1, C2) and a protective diode (D1, D2), said switching means (T1, T2) being alternately closed and opened so as to supply an AC voltage (e) at a chopper frequency, which voltage is applied to a load (31) having one of its terminals connected to a common point (P) that is common to said switching sections (10, 11);
said chopper power supply being characterized in that a pulse current source (30) is connected to said common point (P), said pulse current source (30) being constituted by an LC-type circuit (L6 to L17, C6 to C17) dimensioned so that the current flowing through said circuit is delayed by π/2 relative to the voltage applied to said load (31) so as to deliver current pulses for alternately charging and discharging each of said capacitors (C1, C2) on the edges of said AC voltage (e).

2. A chopper power supply according to claim 1, characterized in that said pulse current source (30) is in parallel with at least one of said switching sections (10, 11).

3. A chopper power supply according to claim 1, characterized in that one of the terminals of said pulse current source (30) is connected to said midpoint (P), and in that its other terminal is connected between two capacitors (C30, C31) in series to which said DC voltage (E) is applied.

4. A chopper power supply according to any one of claims 1 to 3, characterized in that said pulse current source (30) is constituted by a set of LC sections in parallel (L6, C6; L7, C7; L8, C8), each LC section (L6, C6; L7, C7; L8, C8) being constituted by an inductor (L6, L7, L8) in series with a capacitor (C6, C7, C8) dimensioned so that the current flowing through each LC section is delayed by π/2 relative to the voltage applied to the section, so as to perform a π/2 phase shift on one of the odd harmonics (f1, f3, f5) of the signal applied to said load or on the fundamental of said signal.

5. A chopper power supply according to any one of claims 1 to 4, characterized in that said pulse current source (30) is constituted by three LC sections in parallel (L6, C6; L7, C7; L8, C8).

6. A chopper power supply according to any one of claims 1 to 5, characterized in that said switching means (T1, T2) are constituted by MOSFET transistors including said protective diodes (D1, D2).
